# EUROPÄISCHE PATENTSCHRIFT

(11) **EP 4 070 985 B1**
(45) Veröffentlichungstag und Bekanntmachung des Hinweises auf die Patenterteilung: **27.05.2026**
(21) Anmeldenummer: 22167397.3
(22) Anmeldetag: 08.04.2022
(51) Int. Cl.: B60L 53/30

(54) **ELEKTRISCHE LEISTUNGSSTEUEREINHEIT UND LADESTATION**
ELECTRIC POWER CONTROL UNIT AND CHARGING STATION
UNITÉ ÉLECTRIQUE DE COMMANDE DE PUISSANCE ET STATION DE CHARGE

(30) Priorität: 30.03.2021 LU 102764
(43) Veröffentlichungstag der Anmeldung: 12.10.2022
(73) Patentinhaber: PHOENIX CONTACT GmbH & Co. KG, 32825 Blomberg (DE)
(72) Erfinder: Remmert, Guido, 59505 Bad Sassendorf (DE); Moser, Alexander, 59457 Werl (DE)
(74) Vertreter: LifeTech IP Spies & Behrndt Patentanwälte PartG mbB

(56) Entgegenhaltungen:
- US-A1- 2017 106 764
- US-A1- 2020 164 755
- US-B1- 10 193 457

## Beschreibung

Die vorliegende Erfindung betrifft eine elektrische Leistungssteuereinheit für eine Ladestation zur Aufladung eines elektrischen Energiespeichers eines elektrisch antreibbaren Kraftfahrzeugs, umfassend folgende Funktionsbausteine:
- ein Gehäuse,
- eine Eingangsschnittstelle für den Anschluss an ein externes Wechselspannungs-Energieversorgungsnetz AC,
- eine Hilfsspannungsversorgungseinrichtung zur Bereitstellung einer für den Betrieb des Ladesystems erforderlichen Hilfsspannung,
- einen Laderegler zur Kommunikation zwischen den Komponenten der Leistungssteuereinheit und dem Kraftfahrzeug,
- eine Isolationsüberwachungseinrichtung zur Überwachung der elektrischen Isolation zwischen der Ausgangsspannung des Ladesystems und dem Erdpotential,
- eine Eingangsschnittstelle für den Anschluss an ein externes Gleichspannungs-Energieversorgungsnetz DC,
- eine Kommunikationsschnittstelle für den Datenaustausch mit einem Laderegler des zu ladenden Kraftfahrzeugs als auch zur Kommunikation mit der Ladestation,
- ein Sicherungselement zur elektrischen Absicherung eines Kurzschlusses, sowie
- eine zwischen die Eingangsschnittstelle für den Anschluss an das externe Gleichspannungs-Energieversorgungsnetz DC und eine DC-Ladeschnittstelle für den Anschluss des zu ladenden Energiespeichers geschaltete DC-Schalteinrichtung, über welche der Strompfad trennbar ist. Darüber hinaus betrifft die Erfindung eine Ladestation, umfassend eine erfindungsgemäße Leistungssteuereinheit.

Aus der Druckschrift DE 10 2017 209 712 A1 ist eine Ladevorrichtung zum Laden einer Energiespeichereinrichtung eines elektrisch betreibbaren Kraftfahrzeugs bekannt. Die Ladevorrichtung umfasst eine Grundladeeinrichtung mit einem Netzanschluss für Netzstrom aus einem Stromnetz sowie eine Schnellladeeinrichtung, welche mit dem Netzanschluss koppelbar ist und welche eine Steuereinrichtung aufweist, mittels welcher der Netzstrom in Ladestrom umwandelbar ist und über welche ein Energiespeicher der Schnellladeeinrichtung in einem Speichermodus mit dem Ladestrom ladbar ist und über welche die Energiespeichereinrichtung in einem Schnelllademodus mit Energie aus dem Energiespeicher ladbar ist. Dabei ist die Schnellladeeinrichtung als von der Grundladeeinrichtung entkoppelbares, für einen Nutzer tragbares und in dem Kraftfahrzeug transportierbares Modul der Ladevorrichtung ausgebildet.

Die Druckschrift DE 10 2018 126 949 A1 beschreibt eine weitere Ladevorrichtung zum Laden der Energiespeichereinrichtung eines elektrisch betreibbaren Kraftfahrzeugs.

In der Druckschrift DE 20 2017 103 306 U1 ist eine Ladeeinrichtung zum Aufladen eines elektrischen Energiespeichers eines Elektrofahrzeugs beschrieben, die an einem Gebäude, beispielsweise an der Decke einer Garage, montierbar ist. Die Ladeeinrichtung umfasst eine Basis, ein Ladekabel und einem an dem Ladekabel angeordneten Steckverbinder zum elektrischen Verbinden mit dem Elektrofahrzeug. An die Basis ist zumindest ein modular an ansetzbares Modulelement anbringbar, das zumindest eine elektrische oder elektronische Funktionsbaugruppe der Ladeeinrichtung aufweist und in einer an die Basis angesetzten Stellung elektrisch mit der Basis verbunden ist.

Die Druckschrift US 2017/0106764 A1 betrifft eine batteriegestützte Ladestation. Ein Batteriesystem mit einer Vielzahl von Batterien und einer Software als Batterieverwaltungssystem (fachsprachlich: Batterie-Management-System, BMS) zur Steuerung des Betriebs des Batteriesystems arbeitet mit einem Fahrzeugladesystem zusammen, um das Elektrofahrzeug unter wahlweiser Verwendung von im Batteriesystem gespeicherter Energie oder von einem Versorgungsnetz bereitgestellter Energie aufzuladen.

Der Erfindung liegt die Aufgabe zugrunde eine elektrische Leistungssteuereinheit für eine Ladestation zur Aufladung eines elektrischen Energiespeichers eines elektrisch antreibbaren Kraftfahrzeugs sowie eine entsprechende Ladestation bereitzustellen, welche jeweils im Hinblick auf den zur Verfügung stehenden Bauraum weiter optimiert ist. Insbesondere soll auch der Verdrahtungsaufwand innerhalb der elektrischen Leistungssteuereinheit als auch der Verdrahtungsaufwand innerhalb der Ladestation reduziert werden. Mit Vorteil soll darüber hinaus die Flexibilität der Leistungsskalierung für den Errichter einer Ladesäule erhöht werden und die Beseitigung von Fehlern bzw. Störungen erleichtert werden.

Diese Aufgabe wird gelöst durch eine elektrische Leistungssteuereinheit mit den Merkmalen des Patentanspruchs 1 sowie durch eine Ladesäule mit den Merkmalen des Patentanspruchs 10.

Eine elektrische Leistungssteuereinheit gemäß der Erfindung umfasst folgende Funktionsbausteine:
- mindestens ein Gehäuse zur Umhausung von zumindest einem der Funktionsbausteine,
- eine Eingangsschnittstelle für den Anschluss an ein externes (also außerhalb der Leistungssteuereinheit vorhandenes) Energieversorgungsnetz,
- eine Hilfsspannungsversorgungseinrichtung zur Bereitstellung einer für den Betrieb des Ladesystems erforderlichen Hilfsspannung,
- einen Laderegler zur Kommunikation zwischen den Komponenten der Leistungssteuereinheit und dem Kraftfahrzeug,
- eine Isolationsüberwachungseinrichtung zur Überwachung der elektrischen Isolation zwischen der Ausgangsspannung des Ladesystems der Leistungssteuereinheit und dem Erdpotential,
- eine Eingangsschnittstelle für den Anschluss an eine Gleichspannungs-Energieversorgung,
- eine Kommunikationsschnittstelle für den Datenaustausch mit einem Laderegler des zu ladenden Kraftfahrzeugs als auch zur Kommunikation mit der Ladestation,
- ein Sicherungselement zur elektrischen Absicherung eines Kurzschlusses, sowie
- eine zwischen die Eingangsschnittstelle für den Anschluss an die Gleichspannungs-Energieversorgung und eine DC-Ladeschnittstelle für den Anschluss des zu ladenden Energiespeichers geschaltete DC-Schalteinrichtung, über welche der Strompfad trennbar ist. Erfindungsgemäß sind eine Mehrzahl von Komponenten mehrerer der vorstehend genannten Funktionsbausteine oder mehrere der vorstehend genannten Funktionsbausteine selbst auf einer Leiterplatte (einer sogenannten PCB - printed circuit board) angeordnet und zumindest teilweise über Leiterbahnen der Leiterplatte elektrisch miteinander verschaltet. Hierdurch wird der Vorteil erzielt, dass Verdrahtungsaufwand in Form von Kabelverdrahtung zwischen den Komponenten eingespart werden kann und die Leistungssteuereinheit kleiner aufgebaut werden kann.

Bevorzugt umfasst die elektrische Leistungssteuereinheit darüber hinaus noch einen als Fl-Schutzschaltereinrichtung zur Überwachung der Isolation zwischen dem Potential des Energieversorgungsnetzes und dem Erdpotential ausgebildeten Funktionsbaustein sowie einen als Überspannungsableiteinrichtung zum Schutz der Komponenten der Leistungssteuereinheit gegen Überspannung ausgebildeten Funktionsbaustein. Mit Vorteil sind die vorstehend aufgeführten Funktionsbausteine in einem einzigen gemeinsamen Einschubgehäuse untergebracht. Alternativ können allerdings auch einzelne Funktionsbausteine in separaten eigenen Gehäusen angeordnet werden.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Gemäß einer vorteilhaften Ausgestaltung der Erfindung kann vorgesehen sein, dass das mindestens eine Gehäuse als standardisiertes Einschubgehäusemodul ausgebildet ist - besonders bevorzugt als 19-Zoll-Einschubgehäuse, wodurch in standardisiertem Format auf verkleinertem Bauraum eine Leistungssteuereinheit aufgebaut ist. Diese kann in entsprechende Einschubaufnahmen wechselbar verbaut werden.

Es kann gemäß einer weiteren bevorzugten Weiterentwicklung der Erfindung auch vorgesehen sein, dass die DC-Ladeschnittstelle zumindest einen Gleichspannungsanschluss aufweist. Mit Vorteil weist die DC-Ladeschnittstelle genau zwei Gleichspannungsanschlüsse für den Anschluss von zu ladenden Energiespeichern von elektrisch betreibbaren Kraftfahrzeugen auf, wobei ein erster Anschluss als CCS-Ladeanschluss und ein zweiter Anschluss als sogenannter CHAdeMO-Ladeanschluss ausgebildet sein kann oder aber wahlweise zwei CCS-Ladeanschlüsse oder zwei CHAdeMO-Ladeanschlüsse verbaut sein können. Hierdurch wird auf konstruktiv einfache Weise den jeweiligen Marktanforderungen Rechnung getragen - auf welche man aufgrund des modularen Aufbaus jederzeit flexibel reagieren und entsprechend gewünschte Ladeanschlüsse verbauen kann.

Mit Vorteil weist die Leistungssteuereinheit darüber hinaus zumindest eine AC-Ladeschnittstelle für den Anschluss des jeweils zu ladenden Energiespeichers (Pufferspeicher) auf, wodurch eine weitere Möglichkeit für das Ladeangebot wahlweise bereitstellbar ist.

Gemäß einer weiteren besonders bevorzugten Ausführungsform der Erfindung kann es vorgesehen sein, dass zwischen der Überspannungsableiteinrichtung und der AC-Ladeschnittstelle eine AC-Schalteinrichtung zur Trennung des Strompfads angeordnet ist. Hierdurch ist das AC-Laden eines elektrisch betreibbaren Kraftfahrzeugs mit elektrischem Energiespeicher ermöglicht, wobei die eingangsseitige AC-Versorgungsspannung der Ladesäule bzw. der Leistungssteuereinrichtung über die steuerbare AC-Schalteinrichtung durchgeschaltet werden kann.

Des Weiteren kann die Erfindung auch dahingehend weiterentwickelt sein, dass ein Fehlerstrom-Überwachungsmodul vorgesehen ist, welches den Strom zwischen der Überspannungsableiteinrichtung und der AC-Ladeschnittstelle überwacht. Der Vorteil dieser Ausgestaltung ist eine weitere bauraumsparende Integration einer weiteren sicherheitsrelevanten Funktion in die elektrische Leistungssteuereinrichtung hinein.

In einer ebenfalls bevorzugten Ausgestaltungsvariante der Erfindung kann auch vorgesehen sein, dass ein Wechselspannungsausgang vorgesehen ist, über welchen eine eingangsseitig vorhandene oder erzeugte Wechselspannung des Energieversorgungsnetzes an weitere Komponenten der Ladestation weitergeleitet werden kann. Hierdurch kann erreicht werden, dass die in der Leistungssteuereinheit eingebauten Schutzeinrichtungen (wie FI-Schutzschalter oder Überspannungsschutz) auch die nachgeschalteten Komponenten/Module schützt. Das externe Energieversorgungsnetz zur Versorgung der elektrischen Leistungssteuereinheit ist bevorzugt als Wechselspannungsnetz ausgeführt. Alternativ kann das Energieversorgungsnetz jedoch auch als Gleichspannungsnetz ausgeführt sein bzw. kann die eingangsseitige Schnittstelle der Leistungssteuereinheit eine Gleichspannungsschnittstelle sein.

Auch kann es vorteilhaft sein, die Erfindung dahingehend weiterzuentwickeln, dass die DC-Schalteinrichtung eine Mehrzahl von Einzelkomponenten umfasst, die auf ihrer der Leiterplatte abgekehrten Seite über parallel zur Leiterplattenebene verlaufend angeordnete Stromschienen elektrisch miteinander verschaltet sind. Besonders bevorzugt weist zumindest eine der Stromschienen einen ersten flachen bzw. flachbandartigen Abschnitt auf, der in seiner Ebene parallel zur Ebene der Leiterplatte ausgerichtet ist und einen zweiten flachen bzw. flachbandartigen Abschnitt auf, der in seiner Ebene im Wesentlichen lotrecht zur Ebene der Leiterplatte ausgerichtet ist, auf. Hierdurch kann mit konstruktiv einfachen Mitteln eine weitere platzsparende Anordnung der Komponenten erreicht werden und eine wesentlich höhere Stromtragfähigkeit als es eine reine Leiterplattenlösung es ermöglichen würde.

Darüber hinaus wird die der Erfindung zugrundeliegende Aufgabe dadurch gelöst, dass eine Mehrzahl von jeweils als Einschubgehäusemodul ausgebildeten Funktionsmodulen wechselbar innerhalb einer Ladesäule anordenbar ist. Dabei ist ein erstes Einschubgehäusemodul als Leistungssteuereinheit gemäß einem der vorstehenden Ansprüche ausgebildet und ist ein zweites Einschubgehäusemodul als Leistungsmodul zur Spannungswandlung und Leistungssteuerung ausgebildet. In einer bevorzugten Weiterbildung ist darüber hinaus ein dritter Typus von Einschubgehäusemodulen in Form eines Speichermoduls vorgesehen, welches eingerichtet ist, die elektrische Energie zwischenzuspeichern und bedarfsweise für den Ladevorgang des elektrischen Energiespeichers freizugeben. Der Vorteil, der sich hierdurch ergibt, ist insbesondere, dass eine Ladesäule mit einer, durch den Aufstellort bedingten geringen Anschlussleistung, im Bereitschaftsbetrieb die Speichermodule mit elektrischer Energie aus dem öffentlichen Netz laden kann und im Ladebetrieb ein elektrisch angetriebenes Fahrzeug mit der Summe der elektrischen Energie aus dem öffentlichen Netz und aus der elektrischen Energie aus den Speichermodulen laden kann. Auf diese Weise wird eine deutlich kürzere Ladezeit ermöglicht.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:
- Figur 1: ein Blockschaltbild über den Aufbau einer elektrischen Leistungssteuereinheit in einer ersten möglichen Ausgestaltung der Erfindung,
- Figur 2: die elektrische Leistungssteuereinheit in Form eines 19-Zoll-Einschubgehäusemoduls in einer schematischen Darstellung in einer perspektivischen Sicht von oben in das Einschubgehäuse,
- Figur 3: die rückseitige Ansicht des Einschubgehäusemoduls der elektrischen Leistungssteuereinheit gemäß Figur 2 in schematischer Darstellung,
- Figur 4: den Aufbau einer als Ladesäule ausgebildeten Ladestation in schematischer Darstellung, und
- Figur 5: den Aufbau einer Ladestation mit dezentral angeordneten Leistungs- und Energiespeichermodulen.

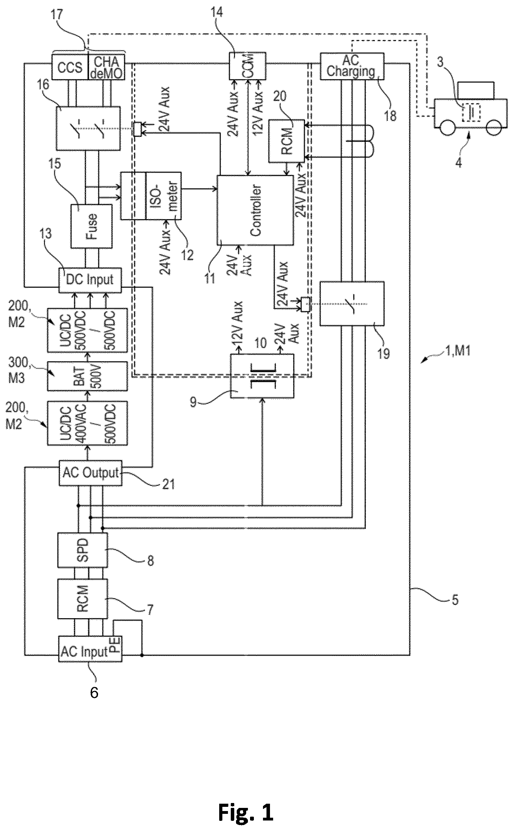

Figur 1 zeigt in einem Blockschaltbild den Aufbau einer elektrischen Leistungssteuereinheit 1 in einer ersten möglichen Ausgestaltung der Erfindung. Das gezeigte Blockschaltbild zeigt eine elektrische Leistungssteuereinheit 1 für eine in dieser Figur nicht dargestellte Ladestation 2 zur Aufladung eines elektrischen Energiespeichers 3 eines elektrisch antreibbaren Kraftfahrzeugs 4. Die Leistungssteuereinheit 1 umfasst dabei die folgenden Funktionsbausteine:
- ein Gehäuse 5 zur Umhausung der weiteren Funktionsbausteine der Leistungssteuereinheit 1,
- eine Eingangsschnittstelle 6 für den Anschluss an ein externes, hier als Wechselspannungsnetz ausgebildetes, Energieversorgungsnetz AC,
- optional eine Fl-Schutzschaltereinrichtung 7 zur Überwachung der Isolation zwischen dem Potential des Wechselspannungs-Energieversorgungsnetzes AC und dem Erdpotential,
- optional eine Überspannungsableiteinrichtung 8 zum Schutz der Komponenten der Leistungssteuereinheit 1 gegen Überspannung,
- eine Hilfsspannungsversorgungseinrichtung 9 zur Bereitstellung einer für den Betrieb des Ladesystems erforderlichen Hilfsspannung 10,
- einen Laderegler 11 zur Kommunikation zwischen den Komponenten der Leistungssteuereinheit 1 und zur Kommunikation mit dem Kraftfahrzeug 4,
- eine Isolationsüberwachungseinrichtung 12 zur Überwachung der elektrischen Isolation zwischen der Ausgangsspannung des Ladesystems und dem Erdpotential,
- eine Eingangsschnittstelle 13 für den Anschluss an eine, insbesondere als über Leistungsmodule mit der Leistungssteuereinheit 1 koppelbare Speicher- bzw.-Puffer-Speichermodule 300 ausgebildete, Gleichspannungs-Energieversorgung DC,
- eine Kommunikationsschnittstelle 14 für den Datenaustausch mit einem Laderegler des zu ladenden Kraftfahrzeugs 4 als auch zur Kommunikation mit in der Ladestation 2 verbauten Leistungsmodulen 200 oder Funktionsmodulen wie z.B. der Speichermodulen 300,
- ein, zwischen die Eingangsschnittstelle 13 für den Anschluss an die Gleichspannungs-Energieversorgung DC und eine DC-Ladeschnittstelle 17 für den Anschluss des zu ladenden Energiespeichers 3 geschaltetes, Sicherungselement 15 zur elektrischen Absicherung eines Kurzschlusses, sowie
- eine, zwischen die Eingangsschnittstelle 13 für den Anschluss an das externe Gleichspannungs-Energieversorgungsnetz DC und eine DC-Ladeschnittstelle 17 für den Anschluss des zu ladenden Energiespeichers 3 geschaltete, DC-Schalteinrichtung 16, über welche der Strompfad trennbar ist.

Dabei sind zumindest eine Mehrzahl von Komponenten mehrerer der vorstehend genannten Funktionsbausteine oder mehrere der o.g. Funktionsbausteine selbst auf einer in Figur 1 nicht gezeigten Leiterplatte 100 angeordnet und zumindest teilweise über Leiterbahnen der Leiterplatte 100 elektrisch miteinander verschaltet. Die vorstehend aufgeführten Funktionsbausteine sind in einem einzigen gemeinsamen Einschubgehäuse - hier in einem 19-Zoll-Standardeinschub - untergebracht. Alternativ - und hier nicht gezeigt - können allerdings auch einzelne Funktionsbausteine in separaten eigenen Gehäusen angeordnet werden. Beispielsweise könnten die Funktionsbausteine der Eingangsschnittstelle (AC input), der Fl-Schutzschaltereinrichtung (RCM) sowie der Funktionsbaustein der Überspannungsableiteinrichtung (SPD) in einem separaten Gehäuse angeordnet sein.

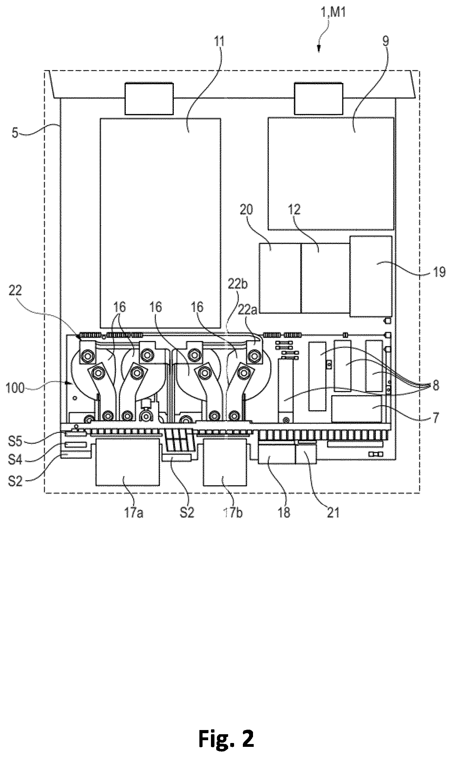

Figur 2 zeigt die elektrische Leistungssteuereinheit 1 in Form eines 19-Zoll-Einschubgehäusemoduls M1 in einer schematischen Darstellung in einer perspektivischen Sicht von oben in das Einschubgehäuse. Dabei ist das Gehäuse 5 als standardisiertes Einschubgehäusemodul in Form eines 19-Zoll-Einschubgehäuses ausgebildet. Die in Figur 1 und in Figur 2 gezeigte DC-Ladeschnittstelle 17 umfasst im gezeigten Ausführungsbeispiel genau zwei Gleichspannungsanschlüsse 17a, 17b für den Anschluss des zu ladenden Energiespeichers 3 eines elektrisch betreibbaren Kraftfahrzeugs 4. Dabei ist der erste Gleichspannungsladeanschluss 17a als sogenannter CCS-Ladeanschluss und der zweite Gleichspannungsladeanschluss als CHAdeMO-Ladeanschluss ausgebildet. Darüber hinaus weist die Leistungssteuereinheit 1 zumindest eine AC-Ladeschnittstelle 18 für den Anschluss des zu ladenden Energiespeichers 3 auf, der das direkte Laden des elektrisch antreibbaren Kraftfahrzeugs 4 mit AC-Wechselspannung aus dem öffentlichen Netz ermöglicht. Zwischen der Überspannungsableiteinrichtung 8 und der AC-Ladeschnittstelle 18 ist eine AC-Schalteinrichtung 19 zur Trennung des Strompfads angeordnet. Ferner ist ein Fehlerstrom-Überwachungsmodul 20 vorgesehen, welches den Strom zwischen der Überspannungsableiteinrichtung 8 und der AC-Ladeschnittstelle 18 überwacht. Zudem ist ein Wechselspannungsspannungsausgang 21 vorgesehen, über welchen die eingangsseitige Wechselspannung des Wechselspannungs-Energieversorgungsnetzes AC an weitere Komponenten der Ladestation 2 weitergeleitet werden kann.

In Figur 2 ist gezeigt, dass die DC-Schalteinrichtung 16 eine Mehrzahl von Einzelkomponenten umfasst, die auf ihrer der Leiterplatte 100 abgekehrten Seite über parallel zur Leiterplattenebene verlaufend angeordnete Stromschienen 22 elektrisch miteinander verschaltet sind. Dabei weisen einzelne der Stromschienen 22 einen ersten Abschnitt 22a auf, der in seiner Ebene parallel zur Ebene der Leiterplatte 100 ausgerichtet ist und einen zweiten Abschnitt 22b auf, der in seiner Ebene im Wesentlichen lotrecht zur Ebene der Leiterplatte 100 ausgerichtet ist. Auf der der Leiterplatte 100 zugekehrten Seite sind die Einzelkomponenten über die Leiterbahnen der Leiterplatte 100 miteinander verschaltet.

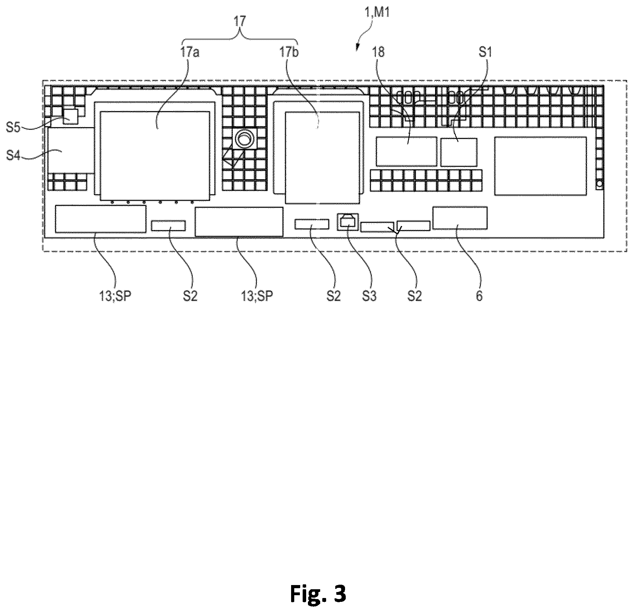

Figur 3 zeigt die rückseitige Ansicht des Einschubgehäusemoduls M1 der elektrischen Leistungssteuereinheit 1 gemäß Figur 1 und Figur 2 in schematischer Darstellung. Gut zu erkennen sind hier insbesondere die verschiedenen Kommunikationsschnittstellen, über die ein Austausch von Daten und Steuerbefehlen erfolgen kann. Über den Wechselspannungsspannungsausgang 21 (S1) erfolgt dabei der Leistungsanschluss der AC Wechselspannung an das/die Leistungsmodul/e 200, welche insbesondere der Ankopplung der elektrischen Speichermodule 300 dienen. Dabei können die Leistungsmodule 200 ebenfalls in 19-Zoll-Einschubgehäusen als zweite Einschubgehäusemodule M2 ausgebildet sein und können auch die Speichermodule 300 ebenfalls in 19-Zoll-Einschubgehäusen als dritte Einschubgehäusemodule M3 ausgebildet sein. Über die die als DC-input ausgebildete Eingangsschnittstelle 13 (SP) wird DC Gleichspannung aus den Leistungsmodulen 200, M2 und den Speichermodulen 300, M3 in die Leistungssteuereinheit 1, M1 geleitet, um diese elektrische Energie zum schnellen Laden des elektrischen Energiespeichers 3 des Kraftfahrzeugs verwenden zu können.

Weitere Kommunikationsschnittstellen, wie eine Kommunikationsschnittstelle S2 zur Kopplung an weitere Peripheriegeräte, wie zum Beispiel Türkontakte der Ladestation oder manuell auszulösender NOTAUS Schalter, welcher sich außen an Ladestation befindet als auch eine Kommunikationsschnittstelle S4 zur Anbindung der Ladesteuerungseinheit an das LAN (local area network) (z.B. über eine Ethernet-Stecker-Aufnahme) als auch eine Kommunikationsschnittstelle S3 zur Anbindung der Leistungssteuerungseinheit 1 an die Leistungsmodule 200, M2 zwecks Regelung oder eine Kommunikationsschnittstelle S5 für eine Mobilfunkanbindung sind vorhanden. Über die dargestellte rückseitige Eingangsschnittstelle 6 erfolgt die Anbindung an ein externes Wechselspannungsnetz. Auch die DC-Ladeschnittstellen 17a, 17b; 17 sowie die AC-Ladeschnittstelle 18 sind schematisch gezeigt.

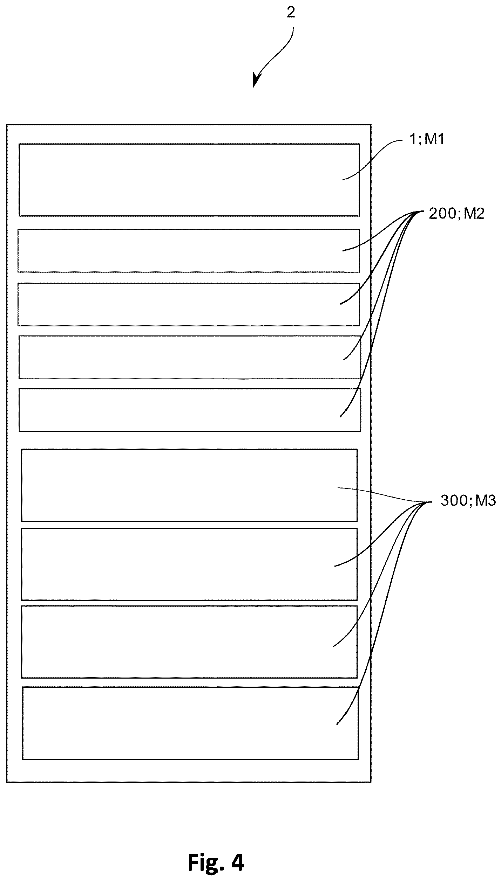

Figur 4 zeigt den Aufbau einer als einheitliche Ladesäule ausgebildeten Ladestation 2 in schematischer Darstellung. Dabei sind in einem gemeinsamen Gehäuse einer Ladestation 2 alle drei Modultypen - wie die Leistungssteuereinheit 1 in Form des ersten Einschubgehäusemoduls M1, die Leistungsmodule 200 in Form von jeweils einem zweiten Einschubgehäusemodul M2 und die Speichermodule 300 in Form von jeweils einem dritten Einschubgehäusemodul M3 - untergebracht bzw. angeordnet. Dabei ist die Ladestation 2 individuell nach Kundenanforderung schnell und einfach konfigurierbar und sind Fehler bei einzelnen Modulen durch einen einfachen Austausch der Module schnell behebbar.

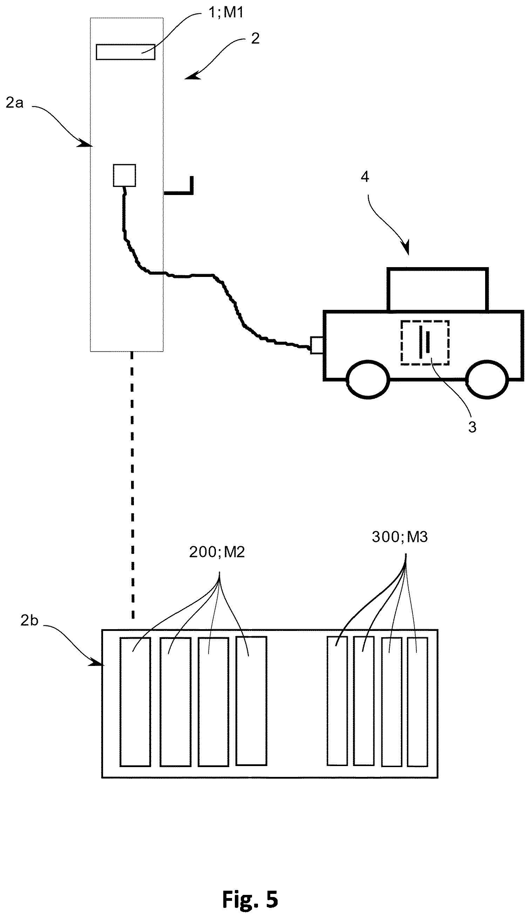

Figur 5 zeigt einen alternativen Aufbau einer Ladestation 2 mit dezentral angeordneten Leistungs- und Energiespeichermodulen 200, 300 und die Anbindung eines zu ladenden elektrisch betreibbaren Kraftfahrzeugs 4 (E-Fahrzeugs) mittels Ladekabel und Steckereinrichtung. Dabei ist eine erste Ladesäuleneinheit 2a vorgesehen, die ausschließlich das Einschubgehäusemodul M1 der Leistungssteuereinheit 1 umhaust und die somit auf sehr kleinem Bauraum - beispielsweise als schlanke Ladesäule mit individuellen Abmessungen und designtechnischen Merkmalen und mit dem Kabelanschluss zur Anbindung an ein elektrisch zu ladendes Kraftfahrzeug 4 - platzsparend an einem Parkplatz aufgebaut sein kann, während die die Leistungsmodule 200 und die Speichermodule 300 in einer entfernten zweiten Ladesäuleneinheit 2b, bevorzugt wiederum als Einschubgehäusemodule M2, M3 ausgebildet, untergebracht sind und elektrisch und kommunikationstechnisch mit der ersten als schlanke Ladesäule ausgebildeten Ladesäuleneinheit 2a am Parkplatz verbunden sind.

Schließlich zeigen die Figur 4 und die Figur 5 auch den schematischen Aufbau einer Ladestation 2 mit einer Mehrzahl von jeweils als Einschubgehäusemodul ausgebildeten Funktionsmodulen, wobei
- ein erstes Einschubgehäusemodul M1 als Leistungssteuereinheit 1 gemäß einem der vorstehenden Ansprüche ausgebildet ist, und
- ein zweites Einschubgehäusemodul M2 als Leistungsmodul zur Spannungswandlung und Leistungssteuerung ausgebildet ist, und vorzugsweise
- ein drittes Einschubgehäusemodul M3 als (Puffer-)Speichermodul ausgebildet ist, welches eingerichtet ist die elektrische Energie zwischenzuspeichern und bedarfsweise für den Ladevorgang freizugeben.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmal definieren, so dient diese Bezeichnung der Unterscheidung zweier gleichartiger Merkmale, ohne eine Rangfolge festzulegen.

### Bezugszeichenliste

1 Leistungssteuereinheit
2 Ladestation
3 Energiespeicher
4 Kraftfahrzeug
5 Gehäuse
6 Eingangsschnittstelle (AC input)
7 FI-Schutzschaltereinrichtung
8 Überspannungsableiteinrichtung
9 Hilfsspannungsversorgungseinrichtung
10 Hilfsspannung
11 Laderegler
12 Isolationsüberwachungseinrichtung
13 Eingangsschnittstelle (DC input)
14 Kommunikationsschnittstelle
15 Sicherungselement
16 DC-Schalteinrichtung
17 DC-Ladeschnittstelle
17a erster DC-Ladeanschluss (CCS-Anschluss)
17b zweiter DC-Ladeanschluss (CHAdeMO-Anschluss)
18 AC-Ladeschnittstelle
19 AC-Schalteinrichtung
20 Fehlerstrom-Überwachungsmodul
21 Wechselspannungsspannungsausgang
22 Stromschiene
22a erster Stromschienenabschnitt
22b zweiter Stromschienenabschnitt
S1 Anschluss Leistungsmodule
S2 Kommunikationsschnittstelle (Peripherie)
S3 Kommunikationsschnittstelle (INTERN)
S4 Kommunikationsschnittstelle (LAN, Ethernet)
S5 Kommunikationsschnittstelle (Mobilfunk)
SP Sternpunkt (DC)
100 Leiterplatte
200 Leistungsmodul
300 Speichermodul
M1 erstes Einschubgehäusemodul (als Leistungssteuereinheit)
M2 zweites Einschubgehäusemodul (als Leistungsmodul)
M3 drittes Einschubgehäusemodul (als Puffer-Speichermodul)

## Patentansprüche

1. Elektrische Leistungssteuereinheit (1) für eine Ladestation (2) zur Aufladung eines elektrischen Energiespeichers (3) eines elektrisch antreibbaren Kraftfahrzeugs (4), umfassend folgende Funktionsbausteine:
- mindestens ein Gehäuse (5),
- eine Eingangsschnittstelle (6) für den Anschluss an ein externes Energieversorgungsnetz (AC; DC),
- eine Hilfsspannungsversorgungseinrichtung (9) zur Bereitstellung einer für den Betrieb des Ladesystems erforderlichen Hilfsspannung (10),
- einen Laderegler (11) zur Kommunikation zwischen den Komponenten der Leistungssteuereinheit (1) und dem Kraftfahrzeug (4),
- eine Isolationsüberwachungseinrichtung (12) zur Überwachung der elektrischen Isolation zwischen der Ausgangsspannung des Ladesystems und dem Erdpotential,
- eine Eingangsschnittstelle (13) für den Anschluss an eine Gleichspannungs-Energieversorgung (DC),
- eine Kommunikationsschnittstelle (14) für den Datenaustausch mit einem Laderegler des zu ladenden Kraftfahrzeugs (4) als auch zur Kommunikation mit der Ladestation (2),
- ein Sicherungselement (15) zur elektrischen Absicherung eines Kurzschlusses, sowie
- eine zwischen die Eingangsschnittstelle (13) für den Anschluss an die Gleichspannungs-Energieversorgung (DC) und eine DC-Ladeschnittstelle (17) für den Anschluss des zu ladenden Energiespeichers (3) geschaltete DC-Schalteinrichtung (16), über welche der Strompfad trennbar ist,
zumindest eine Mehrzahl von Komponenten mehrerer der vorstehend genannten Funktionsbausteine auf einer Leiterplatte (100) angeordnet und zumindest teilweise über Leiterbahnen der Leiterplatte (100) elektrisch miteinander verschaltet sind, und
dardurch gekennzeichnet, dass
die DC-Schalteinrichtung (16) eine Mehrzahl von Einzelkomponenten umfasst, die auf ihrer der Leiterplatte (100) abgekehrten Seite über parallel zur Leiterplattenebene verlaufend angeordnete Stromschienen (22) elektrisch miteinander verschaltet sind.

2. Leistungssteuereinheit (1) nach Anspruch 1,
**dadurch gekennzeichnet, dass**
das mindestens eine Gehäuse (5) als standardisiertes Einschubgehäusemodul, insbesondere als 19-Zoll-Einschubgehäuse ausgebildet ist.

3. Leistungssteuereinheit (1) nach einem der vorstehenden Ansprüche,
**dadurch gekennzeichnet, dass**
die DC-Ladeschnittstelle (17) zumindest einen Gleichspannungsanschluss, bevorzugt genau zwei Gleichspannungsanschlüsse für den Anschluss des zu ladenden Energiespeichers (3) aufweist.

4. Leistungssteuereinheit (1) nach einem der vorstehenden Ansprüche,
**dadurch gekennzeichnet, dass**
die Leistungssteuereinheit (1) zumindest eine AC-Ladeschnittstelle (18) für den Anschluss des zu ladenden Energiespeichers (3) aufweist.

5. Leistungssteuereinheit (1) nach Anspruch 4,
**dadurch gekennzeichnet, dass**
zwischen der Überspannungsableiteinrichtung (8) und der AC-Ladeschnittstelle (18) eine AC-Schalteinrichtung (19) zur Trennung des Strompfads angeordnet ist.

6. Leistungssteuereinheit (1) nach Anspruch 4 oder 5,
**dadurch gekennzeichnet, dass**
ein Fehlerstrom-Überwachungsmodul (20) vorgesehen ist, welches den Strom zwischen der Überspannungsableiteinrichtung (8) und der AC-Ladeschnittstelle (18) überwacht.

7. Leistungssteuereinheit (1) nach einem der vorstehenden Ansprüche,
**dadurch gekennzeichnet, dass**
ein Wechselspannungsspannungsausgang (21) vorgesehen ist, über welchen eine eingangsseitige Wechselspannung des Energieversorgungsnetzes (AC; DC) an weitere Komponenten der Ladestation (2) weitergeleitet werden kann.

8. Leistungssteuereinheit (1) nach einem der Ansprüche 1 bis 7,
**dadurch gekennzeichnet, dass**
zumindest eine der Stromschienen (22) einen ersten Abschnitt (22a) aufweist, der in seiner Ebene parallel zur Ebene der Leiterplatte (100) ausgerichtet ist und einen zweiten Abschnitt (22b) aufweist, der in seiner Ebene im Wesentlichen lotrecht zur Ebene der Leiterplatte (100) ausgerichtet ist.

9. Leistungssteuereinheit (1) nach Anspruch 1,
**dadurch gekennzeichnet, dass**
die Einzelkomponenten der DC-Schalteinrichtung (16) auf ihrer der Leiterplatte (100) zugekehrten Seite über Leiterbahnen der Leiterplatte (100) elektrisch miteinander verschaltet sind.

10. Ladestation (2), umfassend eine Mehrzahl von jeweils als Einschubgehäusemodul ausgebildeten Funktionsmodulen, wobei
- ein erstes Einschubgehäusemodul (M1) als Leistungssteuereinheit (1) gemäß einem der vorstehenden Ansprüche ausgebildet ist, und
- ein zweites Einschubgehäusemodul (M2) als Leistungsmodul (200) zur Spannungswandlung und Leistungssteuerung ausgebildet ist, und vorzugsweise
- ein drittes Einschubgehäusemodul (M3) als Speichermodul (300) ausgebildet ist, welches eingerichtet ist die elektrische Energie zwischenzuspeichern und bedarfsweise für den Ladevorgang des elektrischen Energiespeichers (3) freizugeben.

## Claims

1. An electrical power control unit (1) for a charging station (2) for charging an electrical energy storage device (3) of an electrically drivable motor vehicle (4), comprising the following functional blocks:
- at least one housing (5),
- an input interface (6) for connection to an external power supply network (AC; DC),
- an auxiliary voltage supply device (9) for providing an auxiliary voltage (10) required for operation of the charging system,
- a charge controller (11) for communication between the components of the power control unit (1) and the motor vehicle (4),
- an insulation monitoring device (12) for monitoring the electrical insulation between the output voltage of the charging system and the earth potential,
- an input interface (13) for connection to a DC power supply (DC),
- a communication interface (14) both for data exchange with a charge controller of the motor vehicle (4) to be charged and for communication with the charging station (2),
- a fuse element (15) for electrically protecting against a short circuit, as well as
- a DC switching device (16) connected between the input interface (13) for connection to the DC power supply (DC) and a DC charging interface (17) for connection of the electrical energy storage device (3) to be charged, via which the current path can be disconnected,
at least a plurality of components of several of the aforementioned functional blocks are arranged on a printed circuit board (100) and are electrically interconnected with one another at least partially via conductor tracks of the printed circuit board (100), and **characterized in that**
the DC switching device (16) comprises a plurality of individual components which, on their side facing away from the printed circuit board (100), are electrically interconnected with one another via busbars (22) arranged extending parallel to the plane of the printed circuit board.

2. The power control unit (1) according to claim 1,
**characterized in that**
the at least one housing (5) is designed as a standardized slide-in housing module, in particular as a 19-inch slide-in housing.

3. The power control unit (1) according to one of the preceding claims,
**characterized in that**
the DC charging interface (17) has at least one DC connection, preferably exactly two DC connections for connection of the electrical energy storage device (3) to be charged.

4. The power control unit (1) according to one of the preceding claims,
**characterized in that**
the power control unit (1) has at least one AC charging interface (18) for connection of the electrical energy storage device (3) to be charged.

5. The power control unit (1) according to claim 4,
**characterized in that**
an AC switching device (19) for disconnecting the current path is arranged between the surge arrester device (8) and the AC charging interface (18).

6. The power control unit (1) according to claim 4 or 5,
**characterized in that**
a fault current monitoring module (20) is provided, which monitors the current between the surge arrester device (8) and the AC charging interface (18).

7. The power control unit (1) according to one of the preceding claims,
**characterized in that**
an AC voltage output (21) is provided, via which an input-side AC voltage of the power supply network (AC; DC) can be passed on to further components of the charging station (2).

8. The power control unit (1) according to one of claims 1 to 7,
**characterized in that**
at least one of the busbars (22) has a first section (22a) which is oriented with its plane parallel to the plane of the printed circuit board (100) and has a second section (22b) which is oriented with its plane substantially perpendicular to the plane of the printed circuit board (100).

9. The power control unit (1) according to claim 1,
**characterized in that**
the individual components of the DC switching device (16) are electrically interconnected with one another on their side facing the printed circuit board (100) via conductor tracks of the printed circuit board (100).

10. A charging station (2), comprising a plurality of functional modules each designed as a slide-in housing module, wherein
- a first slide-in housing module (M1) is designed as a power control unit (1) according to one of the preceding claims, and
- a second slide-in housing module (M2) is designed as a power module (200) for voltage conversion and power control, and preferably
- a third slide-in housing module (M3) is designed as a storage module (300), which is configured to temporarily store the electrical energy and to release it as needed for the charging process of the electrical energy storage device (3).

## Revendications

1. Unité de commande de puissance électrique (1) pour une station de charge (2) destinée à la charge d'un dispositif de stockage d'énergie électrique (3) d'un véhicule automobile à propulsion électrique (4), comprenant les blocs fonctionnels suivants :
- au moins un boîtier (5),
- une interface d'entrée (6) pour le raccordement à un réseau d'alimentation en énergie externe (CA ; CC),
- un dispositif d'alimentation en tension auxiliaire (9) pour fournir une tension auxiliaire (10) nécessaire au fonctionnement du système de charge,
- un contrôleur de charge (11) pour la communication entre les composants de l'unité de commande de puissance (1) et le véhicule automobile (4),
- un dispositif de surveillance d'isolement (12) pour la surveillance de l'isolement électrique entre la tension de sortie du système de charge et le potentiel de terre,
- une interface d'entrée (13) pour le raccordement à une alimentation en énergie en courant continu (CC),
- une interface de communication (14) pour l'échange de données avec un contrôleur de charge du véhicule automobile (4) à charger ainsi que pour la communication avec la station de charge (2),
- un élément de protection (15) pour la protection électrique contre un court-circuit, ainsi que
- un dispositif de commutation CC (16) interposé entre l'interface d'entrée (13) pour le raccordement à l'alimentation en énergie en courant continu (CC) et une interface de charge CC (17) pour le raccordement du dispositif de stockage d'énergie (3) à charger, par l'intermédiaire duquel le trajet de courant peut être interrompu,
au moins une pluralité de composants de plusieurs des blocs fonctionnels susmentionnés sont disposés sur une carte de circuit imprimé (100) et sont, au moins partiellement, électriquement interconnectés entre eux par des pistes conductrices de la carte de circuit imprimé (100), et **caractérisé en ce que**
le dispositif de commutation CC (16) comprend une pluralité de composants individuels qui, sur leur face tournée à l'opposé de la carte de circuit imprimé (100), sont électriquement interconnectés entre eux par des barres conductrices (22) disposées de manière à s'étendre parallèlement au plan de la carte de circuit imprimé.

2. Unité de commande de puissance (1) selon la revendication 1,
**caractérisé en ce que**
le ou les boîtiers (5) sont réalisés sous la forme d'un module de boîtier enfichable normalisé, notamment d'un boîtier enfichable de 19 pouces.

3. Unité de commande de puissance (1) selon l'une des revendications précédentes,
**caractérisé en ce que**
l'interface de charge CC (17) comporte au moins un raccordement CC, de préférence exactement deux raccordements CC pour le raccordement du dispositif de stockage d'énergie (3) à charger.

4. Unité de commande de puissance (1) selon l'une des revendications précédentes,
**caractérisé en ce que**
l'unité de commande de puissance (1) comporte au moins une interface de charge CA (18) pour le raccordement du dispositif de stockage d'énergie (3) à charger.

5. Unité de commande de puissance (1) selon la revendication 4,
**caractérisé en ce que**
un dispositif de commutation CA (19) destiné à l'interruption du trajet de courant est disposé entre le dispositif de protection contre les surtensions (8) et l'interface de charge CA (18).

6. Unité de commande de puissance (1) selon la revendication 4 ou 5,
**caractérisé en ce que**
un module de surveillance de courant de défaut (20) est prévu, lequel surveille le courant entre le dispositif de protection contre les surtensions (8) et l'interface de charge CA (18).

7. Unité de commande de puissance (1) selon l'une des revendications précédentes,
**caractérisé en ce que**
une sortie de tension CA (21) est prévue, par laquelle une tension alternative côté entrée du réseau d'alimentation en énergie (CA ; CC) peut être transmise à d'autres composants de la station de charge (2).

8. Unité de commande de puissance (1) selon l'une des revendications 1 à 7,
**caractérisé en ce que**
au moins une des barres conductrices (22) comporte une première section (22a) dont le plan est orienté parallèlement au plan de la carte de circuit imprimé (100), et comporte une deuxième section (22b) dont le plan est orienté sensiblement perpendiculairement au plan de la carte de circuit imprimé (100).

9. Unité de commande de puissance (1) selon la revendication 1,
**caractérisé en ce que**
les composants individuels du dispositif de commutation CC (16), sur leur face tournée vers la carte de circuit imprimé (100), sont électriquement interconnectés entre eux par des pistes conductrices de la carte de circuit imprimé (100).

10. Station de charge (2), comprenant une pluralité de modules fonctionnels chacun réalisé sous la forme d'un module de boîtier enfichable, dans lequel
- un premier module de boîtier enfichable (M1) est réalisé sous la forme d'une unité de commande de puissance (1) selon l'une des revendications précédentes, et
- un deuxième module de boîtier enfichable (M2) est réalisé sous la forme d'un module de puissance (200) pour la conversion de tension et la commande de puissance, et de préférence
- un troisième module de boîtier enfichable (M3) est réalisé sous la forme d'un module de stockage (300), lequel est configuré pour stocker temporairement l'énergie électrique et la libérer, selon les besoins, pour l'opération de charge du dispositif de stockage d'énergie électrique (3).
